# EUROPÄISCHE PATENTSCHRIFT

(11) **EP 3 585 590 B1**
(45) Veröffentlichungstag und Bekanntmachung des Hinweises auf die Patenterteilung: **27.01.2021**
(21) Anmeldenummer: 18711016.8
(22) Anmeldetag: 21.02.2018
(51) Int. Cl.: B29B 7/48, B29B 7/60, B29B 7/82, B29B 7/84, B29B 7/86, B29B 7/94, B29C 48/285, B29C 48/29, B29C 48/38, B29C 48/435, B29C 48/44, C09D 175/04, B29C 48/00, B29C 48/76, B29C 48/84, B29C 48/85

(54) **VERFAHREN ZUR HERSTELLUNG VON THERMISCH VERNETZBAREN POLYMEREN IN EINEM PLANETWALZENEXTRUDER**
METHOD FOR PRODUCING THERMALLY CROSSLINKABLE POLYMERS IN A PLANETARY ROLLER EXTRUDER
PROCÉDÉ POUR PRÉPARER DES POLYMÈRES THERMORÉTICULABLES DANS UNE EXTRUDEUSE À ROULEAUX PLANÉTAIRES

(30) Priorität: 24.02.2017 DE 102017203062
(43) Veröffentlichungstag der Anmeldung: 01.01.2020
(73) Patentinhaber: Entex Rust & Mitschke GmbH, 44805 Bochum (DE)
(72) Erfinder: MASSOW, Klaus, 22393 Hamburg (DE); RUST, Harald, 44805 Bochum (DE)
(74) Vertreter: Kaewert, Klaus
(86) Internationale Anmeldenummer: PCT/EP2018/054308
(87) Internationale Veröffentlichungsnummer: WO 2018/153935

(56) Entgegenhaltungen:
- EP-A2- 1 077 091
- DE-A1- 19 548 136
- DE-A1- 19 806 609
- DE-A1- 19 939 075
- DE-A1- 19 939 077
- DE-A1-102011 112 081
- US-A1- 2007 173 622

## Beschreibung

Die Erfindung betrifft ein Verfahren zur Herstellung von thermisch vernetzbaren Polymeren in einem Planetwalzenextruder.

Viele Aggregate zur kontinuierlichen Herstellung und Verarbeitung von lösemittelfreien und/oder thermisch vernetzbaren Polymersystemen sind bekannt. Zumeist finden Schneckenmaschinen wie Einschnecken-, Doppelschnecken- oder Planetwalzenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, für diese Aufgabe eingesetzt.

Extruder (Einschnecken- und Doppelschneckenextruder, Planetwalzenextruder) finden insbesondere zur Kunststoffverarbeitung Anwendung. Dabei wird der Kunststoff in der Regel in Form eines Granulates eingesetzt und durch den Extruder plastifiziert und über eine Düse ausgetragen, die den plastifizierten Kunststoff in eine gewünschte Form bringt.

In der Kunststoffverareitung wird unter Plastifizierung das Umwandeln von pulverförmigen oder granulatförmigen Kunststoffen durch Temperatur und Druck verstanden, also eine Erniedrigung der Viskosität des Materials. Hierbei werden in Verarbeitungsmaschinen wie zum Beispiel den Extrudern die Kunststoffe über ihre spezifischen Schmelztemperaturen erhitzt, so dass sie eine heiße, homogene Kunststoffmasse bilden. Ist der Kunststoff dann plastifiziert, kann er im weiteren Prozess zu zum Beispiel Rohren, Platten, Folien oder Spritzgussteilen ausgeformt werden. Auch ein Beschichten auf einen Untergrund wie ein Trägermaterial ist so möglich.

Daneben bezeichnet man als Plastifikation das Zusetzen von Weichmachern (Plastifizier-, Plastifizierungs-, Plastifikationsmittel, Plastifikatoren) zu Kunststoffen, also chemische Substanzen, die die Elastizität des Materials beeinflussen.

Über das Plastifizieren hinaus ist die Aufgabe des Extruders, die Schmelze zu homogenisieren. Zumeist müssen Additive und Zuschläge in die Kunststoffmatrix eingearbeitet werden. In diesem Fall hat der Extruder die Aufgabe, Zuschläge und Additive gleichmäßig zu verteilen.

Planetwalzenextruder fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.
Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Für die Verarbeitung von Kunststoffen haben Planetwalzenextruder in der Regel einen Füllteil und einen Compoundierteil.
Das Füllteil besteht aus einer Förderschnecke, auf die die zu plastifizierenden Polymeresowie gegebenenfalls zumindest ein Teil weiterer Feststoffkomponenten kontinuierlich dosiert werden. Die Förderschnecke übergibt das Material dann dem Compoundierteil. Innerhalb des Compoundierteils können bei Bedarf weitere Feststoffe zugegeben werden, was vorzugsweise über Seitenschneckendosierer erfolgt, die das Material über Öffnungen im Mantel der Walzenzylinder in den Planetwalzenextruder hineinbefördern und den Austritt der bereits plastifizierten Polymere verhindern.
Die Zugabe flüssiger Rezepturkomponenten erfolgt in der Regel nicht über das Füllteil des Planetwalzenextruders, sondern erst stromab im Compoundierteil, da die Flüssigkeiten häufig den Plastifizierungsprozess der Polymeren ungünstig beeinflussen. Die Zugabe der Flüssigkomponenten kann dabei über Öffnungen zwischen den Walzenzylindern oder über eine spezielle Bohrung im Mantel eines Walzenzylinders erfolgen.

Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird.

Das Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Das umgebende Gehäuse hat in zeitgemäßer Ausbildung einen Doppelmantel. Der Innenmantel wird durch eine Buchse, die mit der Innenverzahnung versehenist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Planetwalzenextruder haben im Verhältnis zu den anderen genannten Extrudern eine extrem große Plastifizierungswirkung. Dies eröffnet die Möglichkeit, Rohstoffe zu bearbeiten, die in den anderen Extrudern gar nicht oder nur mangelhaft einsetzbar sind. Planetwalzenextruder können aber auch genutzt werden, um die Produktionsleistung erheblich zu erhöhen.

Alle Extruder haben das Problem, dass in der Schmelze gasförmige Bestandteile auftreten können, die unerwünscht sind oder die im weiteren Verarbeitungsprozess die Qualität des herzustellenden Produkts negativ beeinflussen.

Solche Bestandteile können zum Beispiel Wasser, Luft oder (Rest-)Lösungsmittel sein. Einige Polymere- beziehungsweise Füllstoffe nehmen Wasser auf. Entweder müssen diese Polymere oder Füllstoffe vorgetrocknet werden, oder aber der im Extruder entstehende Dampf muss abgezogen werden.

Gasförmige Bestandteile, die am Anfang erwünscht und im weiteren Verarbeitungsvorgang unerwünscht sind, können organische Lösungsmittel, Wasser, Luft, Reaktionsbeschleuniger oder Reaktionsinhibitoren beziehungsweise inerte Gase wie beispielsweise Stickstoff, Argon oder Kohlendioxid sein. Soweit kein vollständiger chemischer Umsatz dieser Gase erfolgt, verbleiben Rückstände mit monomeren, oligomeren Abbauprodukten und Zersetzungsprodukten.

Der Anteil an flüchtigenflüssigen Bestandteilen in plastifizierten Polymeren kann häufigbis zu 3 bis 4 Gew.-% betragen, darf aber in extrudierten Polymeren meist nicht mehr als 0,1 Gew.-% betragen.

Es gibt verschiedene Gründe, die zur Entgasung zwingen.
Dazu gehören:
- Verbesserung der Produktqualität
- Vermeidung gesundheitlicher Schädigung
- Verringerung der Kosten
- Verhindern eines chemischen Abbaus
- Durchführung weiterer Verfahrensschritte

Zum Entgasen werden unterschiedliche Geräte angeboten. Zumeist wird die Entgasung am Extruder vorgenommen. Zunächst wird dazu am Extruder eine Entgasungszone definiert, die sich in der Regel am Ende der Verfahrenslänge unmittelbar vor Austritt der Polymere aus dem Extruder befindet. Nachteilig bei dieser Entgasungsposition ist, dass auch leicht verdampfbare flüssige Komponenten, die eigentlich in definierter Menge in den Polymeren verbleiben sollen, wie beispielsweise Vernetzer, Plastifizierungsmittel usw., in undefinierter Weise den Polymeren durch das ungewollte Verdampfen entzogen werden können.

Zum Entgasen werden diverse Lösungen angeboten. Alle Lösungen basieren darauf, dass die in der Schmelze gelösten flüchtigen Bestandteile durch Druckreduzierung frei werden. Der Druckabfall kann auf Umgebungsdruck oder auf einen darunter liegenden Druck erfolgen. Zwangsläufig löst sich das Gas dann aus der Schmelze. Die Gasblasen können dann abgezogen werden.

Die EP1077091A2 zeigt ein Verfahren zur kontinuierlichen Herstellung von Selbstklebemassen in einem Extruder. Dabei besitzt der Extruder ein Füllteil in Einschneckenextruderbauweise und drei nachgeordnete Walzenteile in Planetwalzenextruderbauweise. Die drei Walzenteile bilden einen Compoundierteil Die drei Walzenteile werden von einer gemeinsamen Zentralspindel durchdrungen. Um die Zentralspindel herum laufen verschiedene Planetspindeln in einem umgebenden Gehäuse um. Die Selbstklebemassen bestehen aus Elastomeren und Harzen, Füllstoffen und/oder Vernetzern. Dabei werden die Feststoffe in das Füllteil eingetragen und an den Compoundierteil übergeben. Nach der Aufgabe der Feststoffe erfolgt ein Absaugen der mit den Feststoffen in den Extruder eingetragenen Luft. Flüssigkomponenten wie Weichmacher, Vernetzer und/oder weiterer klebrig machender Harze werden in den Compoundierteil aufgegeben.

Als Gasabzug eignet sich bereits eine im Bereich des Druckabfalles vorgesehene Öffnung am Mantel/Gehäuse des Extruders, die wahlweise an eine Saugleitung angeschlossen ist. Bei Kaskadenextruderanlagen findet die Entgasung zumeist zwischen dem Primärextruder und dem Sekundärextruder statt.

Im Betrieb zeigt sich, dass die Entgasungszone eine relativ sensible Zone ist. Hier gilt es, eine möglichst optimale Trennung von Gas und Polymerschmelze zu erreichen sowie ein Austreten der plastifizierten Materialien zu verhindern.

Bekannt ist, dass die Entgasung im Planetwalzenextruder im Bereich der Anlaufringe stattfindet. Die Entgasung an dieser Position ist aber nur für einige wenige Materialien ausreichend effektiv: Materialien mit höheren Viskositäten, wie es sich bei den meisten plastifizierten Polymeren handelt, können zumeist nicht, oder nicht in der gewünschten Weise und Vollständigkeit entgast werden, da es häufig nach kürzester Zeit zu einem Dichtsetzen der Entgasungsöffnung mit Material kommt, was dann sogar zu einem vollständigen Verlust der Entgasungsfähigkeit führen kann.

Planetwalzenextruder sind in Modulbauweiseaus einzelnen Walzenzylindern zusammengesetzt. Jedes Modul besteht aus einer allen Modulen gemeinsamen Zentralspindel, um die Zentralspindel umlaufenden Planetenspindeln und einem Gehäuse. Anzahl und Art der Planetenspindeln können in jedem Modul unterschiedlich sein und der speziellen Verfahrensaufgabe des Moduls angepasst sein. Die Gehäuse der Module sind an den Enden mit Flanschen versehen, über die die Module miteinander gekoppelt werden können. Die Stirnflächen der Module sind über Zwischenringe miteinander verbunden, die es in unterschiedlichen Ausführungen gibt. So gibt es beispielsweise Zwischenringe, die den freien Querschnitt am Ende eines Walzenzylinder verringern und so die Verweilzeit in dem stromaufwärtigen Walzenzylinder beeinflussen und somit Einfluss beispielsweise auf den Dispergierprozess nehmen können. Es gibt weiterhin Ausführungsformen von Zwischenringen, die Fördercharakteristik des Materials innerhalb des Planetwalzenextruders nicht beeinflussen.

Für eine Entgasung in einem Planetwalzenextruder werden die Zwischenringe so gewählt, dass sie an gewünschter Entgasungsstelle über mindestens eine radiale Bohrung verfügen, über die die gasförmigen Bestandteile entweichen können.

Gemäß der DE 100 54 854 A1 sind im Bereich der als Anlaufringe ausgeführtenZwischenringe zugleich Stauscheiben vorgesehen, so dass die Schmelze nach dem Durchtritt an der Stauscheibe von einer Zone höheren Druckes in eine Zone niedrigeren Druckes gelangt. Die Zone niedrigeren Druckes liegt in Förderrichtung des Extruders hinter der Stauscheibe.

Der niedrigere Druck wird durch eine Zone geringer Druckwirkung erreicht. Das kann zum Beispiel durch Unterbrechungen der Zähne der Planetenspindeln erreicht werden. Ein Bereich ohne Druckwirkung kann dadurch erreicht werden, dass die Planetenspindeln in der Zone keine Zähne besitzen oder dass eine Volumenserweiterung dadurch entsteht, dass die Planetenspindeln in einigem Abstand von der Stauscheibe beginnen.

Eine Variante zur Entgasung schlägt gemäß der DE 198 56 235 A1 vor, die Schmelze allein oder zusätzlich rückwärts zu entgasen. Die Rückwärtsentgasung erfolgt dadurch, dass ein Gasabzug erfolgt, bevor in der Kompressionszone des Füllteils eine den Gasdurchtritt verhindernde Materialverdichtung stattfindet. Je nach Abstand der den Gasdurchtritt verhindernden Materialverdichtung kann die Rückwärtsentgasung zum Beispiel in Einzugsrichtung des Materials bis 80 cm Abstand von dem Materialeinzug aufweisen.

Die Rückwärtsentgasung schließt auch ein, dass frei werdendes Gas durch den Materialeinzug zurückströmt oder die Rückwärtsentgasung an dem Extruder in axialer Richtung und Förderrichtung vor der Aufgabe des Einsatzmateriales stattfindet.

Vorzugsweise erfolgt die Rückwärtsentgasung im Rahmen einer mehrstufigen Entgasung und bildet die Rückwärtsentgasung im Bereich der Aufgabe des Einsatzmaterials den ersten Entgasungsschritt, in dem insbesondere Luft abgezogen wird.

Für die Entgasung kann ausreichend sein, wenn lediglich Öffnungen vorhanden sind, durch welche das Gas beziehungsweise eingezogene Luft entweichen kann. Die Entgasung kann aber auch durch Anlegen eines Saugzuges verstärkt werden.

Für die Rückwärtsentgasung ist von Vorteil, wenn der Extruder in dem Bereich der Gasführung als Planetwalzenextruderabschnitt ausgebildet ist. Der Planetwalzenextruderabschnitt bietet zwischen den umlaufenen Planetenspindeln besonders günstige Gasdurchtritte.

Für die Entgasung kann ausreichend sein, wenn lediglich Öffnungen vorhanden sind, durch welche das Gas beziehungsweise eingezogene Luft entweichen kann. Die Entgasung kann aber auch durch Anlegen eines Saugzuges verstärkt werden.
Dennoch zeigt sich, dass die bekannten Entgasungsverfahren nicht ausreichend sind, den Gasgehalt in den Polymerschmelzen auf sehr niedrige Werte zu reduzieren. Weiterhin ist es bisher nicht möglich, thermisch vernetzbare Polymere so in einem Planetwalzenextruder herzustellen, dass aus dem Planetwalzenextruder eine sehr reaktive Masse ausgetragen werden kann, die erst zu einemspäteren Zeitpunkt vernetzt werden kann.

Aufgabe der vorliegenden Erfindung ist es, die Nachteile der bisherigen Verfahren zur Herstellung von thermisch vernetzbaren Polymeren auszuräumen, so dass thermische Vernetzer und andere verdampfbare Flüssigkeiten in definierter Menge so in jene plastifizierten Polymere eingearbeitet werden können, dass eine inline-Beschichtung ohne weitere Verfahrensschritte möglich ist, und so dass die plastifizierten Polymere nahezu blasenfrei aus dem Mischaggregat kommen.

Gelöst wird diese Aufgabe durch ein Verfahren zur Herstellung von thermisch vernetzbaren Polymeren, wie es im Hauptanspruch dargelegt ist. Gegenstand der Unteransprüche sind vorteilhafte Ausführungen des Erfindungsgegenstandes.

Demgemäß betrifft die Erfindung ein Verfahren zur Herstellung von thermisch vernetzbaren Polymeren in einem Planetwalzenextruder, das die folgenden Schritte aufweist:
a) Der Planetwalzenextruder weist einen Füllteil und einen Compoundierteilauf, der von einem Walzenzylinderbereich gebildet wird, der mindestens aus zwei, vorzugsweise mindestens aus drei gekoppelten Walzenzylindern besteht, dessen Planetenspindeln durch eine einzige gemeinsame Zentralspindel angetrieben werden.
b) Die Polymere werden dem Planetwalzenextruder in einem plastifizierten Zustand zugeführt.
c) Die plastifiziertenPolymere werden in den ersten Walzenzylinder eingespeist, und zwar innerhalb der ersten Hälfte des ersten Walzenzylinders.
d) Der Füllteil des Planetwalzenextruders ist mit Vakuum beaufschlagt.
e) Sofern der Walzenzylinderbereich aus zwei Walzenzylindern gebildet wird, weist der Mantel des zweiten Walzenzylinders eine Öffnung auf, über die die plastifizierten Polymere mittels Vakuum von Luft und gegebenenfalls weiteren flüchtigen Komponenten befreit werden. Oder, sofern der Walzenzylinderbereich aus mehr als zwei Walzenzylindern gebildet wird, weist der Mantel des zweiten Walzenzylinders der mindestens drei Walzenzylinder oder der Mantel eines stromab anschließenden Walzenzylinders eine Öffnung auf, beispielsweise der dritte Walzenzylinder, über die die plastifizierten Polymere mittels Vakuum von Luft und gegebenenfalls weiteren flüchtigen Komponenten befreit werden.
f) Die Vorlauftemperaturen von Zentralspindel und der unter Vakuum stehenden mindestens zwei Walzenzylinder sind so eingestellt, dass die zu entgasenden Polymere im plastischen Zustand verbleiben.
g) Stromab der Entgasung mittels Vakuum werden den plastifizierten Polymeren eine oder mehrere Flüssigkeiten wie thermische Vernetzer, Vernetzungsbeschleuniger, Farbstofflösungen oder Farbstoffdispersionen vorzugsweise kontinuierlich zudosiert, also in den zweiten Walzenzylinder beziehungsweise in einen oder mehreren der gegebenenfallsvorhandenen weiteren Walzenzylindern oder in die Zwischenringe zwischen zweitem und drittem Walzenzylinder beziehungsweise zwischen drittem und viertem Walzenzylinder usw.
h) Die Mischung aus plastifizierten Polymeren und Flüssigkeiten werden in dem Walzenzylinderbereich, in dem die Flüssigkeiten in die plastifizierten Polymere eingearbeitet werden, so gekühlt, dass es nach Austritt der Mischungaus dem Planetwalzenextruder zu keiner Verdampfung der in den plastifizierten Polymeren bevorzugt homogen eingemischten Flüssigkeiten kommt.
i) Die Länge des Walzenzylinderbereichs, in dem eine Entgasung der plastifizierten Polymere mittels Vakuum erfolgt, liegt zwischen mehr als 50% und 80%, vorzugsweise zwischen 60% und 70% der Länge des gesamten Walzenzylinderbereichs.
j) Die Mischung aus plastifizierten Polymeren und modifizierenden Flüssigkeiten wird vorzugsweise ohne weitere zusätzliche Aufbereitung einem Beschichtungsaggregat zugeführt, weiter vorzugsweise inline, das heißt ohne zwischenzeitliches Abfüllen oder Umfüllen mit nachfolgendem Wiederaufschmelzen.

Gemäß Schritt d) ist der Füllteil des Planetwalzenextruders mit Vakuum beaufschlagt, mit dessen Hilfe die stromabwärts des Füllteils eintretenden plastifizierten Polymere zumindest teilweise von Luft und gegebenenfalls weiteren flüchtigen Bestandteilen befreit werden.
Das heißt, die Luft beziehungsweise die weiteren flüchtigen Bestandteile wandern stromaufwärts gegen den Massestrom.

Gemäß einer bevorzugten Ausführungsform der Erfindung können neben der in Merkmal e) genannten Öffnung im Mantel des zweiten oder eines stromab anschließenden Walzenzylinders weitere Öffnungen in den Mänteln der danach stetsweiter stromab anschließenden Walzenzylinder vorhanden sein.

Gemäß einer bevorzugten Ausführungsform der Erfindung ist zusätzlich bereits in der Mantelöffnung des ersten Walzenzylinders zumindest eine Öffnung vorhanden, über die die plastifizierten Polymere mittels Vakuum von Luft und gegebenenfalls weiteren flüchtigen Komponenten befreit werden.

Weiter vorzugsweise erfolgt die Entgasung im Füllteil beziehungsweise der Mantelöffnung des ersten Walzenzylinders, indem am Austritt am Füllteil beziehungsweise an der Mantelöffnung des ersten Walzenzylinders ein Druck von kleiner als 50 mbar, vorzugsweise ein Druck von kleiner 10 mbar anliegt.

Gemäß einer weiteren bevorzugten Ausführungsform der Erfindung ist die Öffnung im Mantel des zweiten Walzenzylinders mit einem Produktniederhaltewerk ausgestattet, das einen Austritt der plastifizierten Polymere aus dem Planetwalzenextruder verhindert. Weiter vorzugsweise ist das Produktniederhaltewerk als kämmendes Doppelschneckenpaar ausgeführt, über dessen freie Flanken Luft sowie gegebenenfalls weitere flüchtige Bestandteile den plastifizierten Polymeren unter dem Einfluss von Wärme und Vakuum entzogen werden.

Gemäß einer weiteren bevorzugten Ausführungsform derErfindungwerden die stromab der Entgasung in den zweiten Walzenzylinder den plastifizierten Polymeren zudosierten eine oder mehrere Flüssigkeiten kontinuierlich zudosiert und mittels Zentralspindel und Planetenspindeln möglichst homogen in die plastifizierten Polymere eingemischt. Sind mehr als zwei Walzenzylinder vorhanden, können die Flüssigkeiten auch in diesen zudosiert werden.
Homogen im Sinne der vorliegenden Erfindung bedeutet dabei mesoskopisch und makroskopisch homogen sowie richtungsunabhängig in den Eigenschaften.

Gemäß einer weiteren bevorzugten Ausführungsform der Erfindung erfolgt die Einspeisung der Flüssigkeiten in die plastifizierten Polymere in einen Zwischenring, der zwischen dem zweiten und dem bevorzugt eingesetzten dritten Walzenzylinder liegt und der zum Zwecke der Einspeisung der modifizierenden Flüssigkeiten über mindestens eine radiale Bohrung verfügt.

Gemäß einer weiteren bevorzugten Ausführungsform der Erfindung erfolgt die Einspeisung der modifizierenden Flüssigkeiten in den Planetwalzenextruder über eine oder mehrere Bohrungen im Mantel eines Walzenzylinders, wobei die Bohrungen vorzugsweise in einem Bereich innerhalb der ersten Hälfte des Walzenzylinders liegen. Zwingend ist, dass diese Bohrungen stromab hinter der Öffnung im Mantel des zweiten Walzenzylinders liegen.

Weiter vorzugsweise erfolgt die Einspeisung der modifizierenden Flüssigkeiten in den Planetwalzenextruder über ein Druckhalteventil.

Weiter vorzugsweise erfolgt die Einspeisung der plastifizierten Polymere in den Planetwalzenextruder durch eine Öffnung in der Wandung des ersten Walzenzylindermantels.
Alternativ kann die Einspeisung der plastifizierten Polymere in den Planetwalzenextruder über einen Zwischenring erfolgen, der sich zwischen Füllteil und erstem Walzenzylinder befindet und der zum Zwecke der Einspeisung der plastifizierten Polymere über mindestens eine radiale Bohrung verfügt.

Weiter ist bevorzugt, wenn die Einspeisung der plastifizierten Polymere in den Planetwalzenextruder mittels einer Schmelzepumpe, mittels eines Ein- oder Mehrwellenextruders oder mittels einer Fass- oder Tankschmelzeinheit erfolgt.

Gemäß einer weiteren bevorzugten Ausführungsform der Erfindung erfolgt der Austritt der Mischung aus dem Planetwalzenextruder mittels einer am Ende des Walzenzylinderbereiches gekoppelten Schmelzepumpe.

Der Wärmeaustausch im Planetwalzenextruder erfolgt vorzugsweise über die Zentralspindel und/oder die Walzenzylinder, die dazu über Heiz-/Kühlgeräte mit Temperiermedium betrieben werden.
Um eine große Bandbreite an Rezepturen fahren sowie die Eigenschaften der Polymerisate gezielt einstellen zu können, ist eine flexible Temperaturführung notwendig; daher ist es vorteilhaft, für die Zentralspindel und die Walzenzylinder separate Temperierkreise einzusetzen und die Walzenzylinder gegebenenfalls zudem mit mehr als einem Temperierkreis auszurüsten.
Als Temperiermedium wird aus thermodynamischen Gründen Wasser beziehungsweise Druckwasser bevorzugt, das Verfahren ist aber nicht hierauf beschränkt.

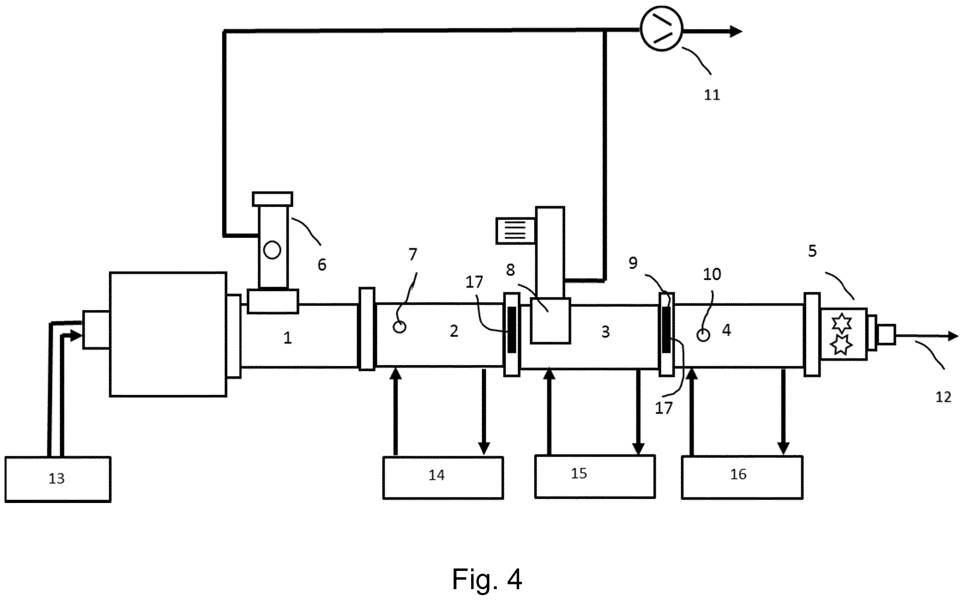

Ein erfindungsgemäßer Planetwalzenextruder ist in besonders vorteilhafter Gestaltung in der Figur 4 gezeigt.

Weiter ist das Beschichtungsaggregat ein Kalander oder eine Düse, durch den beziehungsweise durch die die Mischung auf ein Trägermaterial aufgebracht wird.

Erfindungsgemäß wird vorgeschlagen, die Beschichtung der bevorzugt hergestellten Klebemassen mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.
Denkbar sind auch Beschichtungswerke wie Kalander (I,F,L-Kalander), so dass die bevorzugte Klebemasse beim Durchgang durch einen oder mehrere Walzenspalte auf die gewünschte Dicke ausgeformt wird.
Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.
Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.
Je nach Art des zu beschichtenden bahnförmigen Trägermaterials kann die Beschichtung im Gleichlauf- oder Gegenlaufverfahren erfolgen.
Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

Das erfindungsgemäße Verfahren zeichnet sich dadurch aus, dass die Mischungen aus plastifizierten Polymeren und den bevorzugt als Flüssigkeit eingesetzten thermischen Vernetzern und/oder Vernetzungsbeschleunigern in dem Walzenzylinderbereich, in dem die thermischen Vernetzer beziehungsweise Vernetzungsbeschleuniger in die plastifizierten Polymere eingearbeitet werden, so gekühlt werden, dass die Zeit, ab der die Mischung beginnt zu vernetzen (Gelbildung), mindestens verdoppelt wird gegenüber der Zeit, die die plastifizierten Polymeren in dem Walzenzylinderbereich aufweisen, in dem sie unter Vakuum von Luft und etwaigen flüchtigen Bestandteilen befreit werden.

Gemäß einer bevorzugten Ausführungsform der Erfindung handelt es sich bei den plastifizierten Polymeren um Polymere aus der Gruppe der nicht-thermoplastischen Elastomere, der thermoplastischen Synthesekautschuke, der Polyacrylate, der Polyurethane, der Polyepoxide sowie Mischungen in beliebigen Verhältnissen hieraus.

Weiter vorzugsweise werden die plastifizierten Polymere mit beispielsweise klebrig machenden Harzen, Füllstoffen, Weichmachern, Ölen, Thixotropiermitteln und gegebenenfalls weiteren Zuschlagstoffen abgemischt.

Neben sonstigen Flüssigkeiten wie Ölen oder Weichmachern werden als Flüssigkeit insbesondere thermische Vernetzen und/oder Vernetzungsbeschleuniger eingesetzt.

Besonders bevorzugt handelt es sich bei den aus dem Planetwalzenextruder kommenden Mischungen um Selbsthaftklebemassen oder um aushärtbare Strukturklebemassen.

Besonders bevorzugt werden damit Klebebandrollen aus dem *ACX^{plus}*-Sortiment der Firma tesa hergestellt.

Derartige Klebebänder umfassen eine Trägerschicht, die auch als Hartphase bezeichnet wird. Die Polymerbasis der Hartphase ist bevorzugt ausgewählt aus der Gruppe bestehend aus Polyvinylchloriden (PVC), Polyethylenterephthalaten (PET), Polyurethanen, Polyolefinen, Polybutylenterephthalaten (PBT), Polycarbonaten, Polymethylmethacrylaten (PMMA), Polyvinylbutyralen (PVB), lonomeren und Mischungen aus zwei oder mehreren der vorstehend aufgeführten Polymere. Besonders bevorzugt ist die Polymerbasis der Hartphase ausgewählt aus der Gruppe bestehend aus Polyvinylchloriden, Polyethylenterephthalaten, Polyurethanen, Polyolefinen und Mischungen aus zwei oder mehreren der vorstehend aufgeführten Polymere. Die Hartphase ist im Wesentlichen eine Polymerfolie, deren Polymerbasis aus den vorstehenden Materialien ausgewählt ist. Unter einer "Polymerfolie" wird eine dünne, flächige, flexible, aufwickelbare Bahn verstanden, deren Materialbasis im Wesentlichen von einem oder mehreren Polymer(en) gebildet wird.

Unter "Polyurethanen" werden in weitgefasstem Sinne polymere Substanzen verstanden, in denen sich wiederholende Einheiten durch Urethan-Gruppierungen -NH-CO-O- miteinander verknüpft sind.

Unter "Polyolefinen" werden Polymere verstanden, die stoffmengenbezogen zu mindestens 50 % Wiederholungseinheiten der allgemeinen Struktur -[-CH₂-CR¹R²-]ₙ- enthalten, worin R¹ für ein Wasserstoffatom und R² für ein Wasserstoffatom oder für eine lineare oder verzweigte, gesättigte aliphatische oder cycloaliphatische Gruppe steht. Soweit die Polymerbasis der Hartphase Polyolefine umfasst, handelt es sich bei diesen besonders bevorzugt um Polyethylene, insbesondere um Polyethylene mit ultrahoher Molmasse (UHMWPE).

Unter der "Polymerbasis" wird das Polymer beziehungsweise werden die Polymere verstanden, das/die den größten Gewichtsanteil aller in der betreffenden Schicht beziehungsweise Phase enthaltenen Polymere ausmacht/ausmachen.

Die Dicke der Hartphase beträgt insbesondere ≤ 150 µm. Bevorzugt beträgt die Dicke der Hartphase 10 bis 150 µm, besonders bevorzugt 30 bis 120 µm und insbesondere 50 bis 100 µm, beispielsweise 70 bis 85 µm. Unter der "Dicke" wird die Ausdehnung der betreffenden Schicht beziehungsweise Phase entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Die Dicke wird durch Messung an mindestens fünf verschiedenen Stellen der betreffenden Schicht beziehungsweise Phase und anschließende Bildung des arithmetischen Mittels aus den erhaltenen Messergebnissen ermittelt. Die Dickenmessung der Hartphase erfolgt dabei in Einklang mit DIN EN ISO 4593.

Derartige Klebebänder können weiterhin eine Weichphase aufweisen, die einen Polymerschaum, eine viskoelastische Masse und/oder eine elastomere Masse umfassen. Die Polymerbasis der Weichphase ist bevorzugt ausgewählt aus Polyolefinen, Polyacrylaten, Polyurethanen und Mischungen aus zwei oder mehreren der vorstehend aufgeführten Polymere.
In der einfachsten Variante besteht das Klebeband nur aus einer Weichphase.

Unter einem "Polymerschaum" wird ein Gebilde aus gasgefüllten kugel- oder polyederförmigen Zellen verstanden, welche durch flüssige, halbflüssige, hochviskose oder feste Zellstege begrenzt werden; ferner ist der Hauptbestandteil der Zellstege ein Polymer oder ein Gemisch mehrerer Polymere.

Unter einer "viskoelastischen Masse" wird ein Material verstanden, das neben Merkmalen der reinen Elastizität (Zurückkehren in den Ausgangszustand nach äußerer mechanischer Einwirkung) auch Merkmale einer viskosen Flüssigkeit zeigt, beispielsweise das Auftraten innerer Reibung bei Deformation. Insbesondere werden Haftklebemassen auf Polymerbasis als viskoelastische Massen angesehen.

Unter einer "elastomeren Masse" wird ein Material verstanden, das gummielastisches Verhalten aufweist und bei 20 °C wiederholt auf mindestens das Zweifache seiner Länge gedehnt werden kann und nach Aufhebung des für die Dehnung erforderlichen Zwanges sofort wieder annähernd seine Ausgangsdimension einnimmt.

Bezüglich des Verständnisses der Begriffe "Polymerbasis", "Polyurethane" und "Polyolefine" gilt das oben Gesagte. Unter "Polyacrylaten" werden Polymere verstanden, deren stoffmengenbezogene Monomerbasis zu mindestens 50% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 50% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Besonders bevorzugt ist die Polymerbasis der Weichphase ausgewählt aus Polyolefinen, Polyacrylaten und Mischungen aus zwei oder mehreren der vorstehend aufgeführten Polymere. Sofern Polyolefine zu der Polymerbasis der Weichphase gehören, sind diese bevorzugt ausgewählt aus Polyethylenen, Ethylen-Vinylacetat-Copolymeren (EVA) und Gemischen aus Polyethylenen und Ethylen-Vinylacetat-Copolymeren (PE/EVA-Blends). Die Polyethylene können dabei verschiedene Polyethylen-Typen sein, beispielsweise HDPE, LDPE, LLDPE, Blends aus diesen Polyethylen-Typen und/oder Gemische davon.

In einer Ausführungsform umfasst die Weichphase einen Schaum und jeweils eine ober- und unterhalb der geschäumten Schicht angeordnete Haftklebeschicht, wobei die Polymerbasis des Schaums aus einem oder mehreren Polyolefin(en) besteht und die Polymerbasis der Haftklebeschichten aus einem oder mehreren Polyacrylat(en) besteht. Besonders bevorzugt besteht die Polymerbasis des Schaums dabei aus einem oder mehreren Polyethylen(en), Ethylen-Vinylacetat-Copolymer(en) und Gemischen aus einem oder mehreren Polyethylen(en) und/oder Ethylen-Vinylacetat-Copolymer(en). Ganz besonders bevorzugt besteht die Polymerbasis des Schaums dabei aus einem oder mehreren Polyethylen(en).

Der Polyolefin-basierte Schaum selbst ist nicht oder nur sehr wenig haftklebrig. Der Verbund mit der Hartphase beziehungsweise dem Substrat wird daher vorteilhaft durch die Haftklebeschichten bewirkt. Die Schäumung des Polyolefin-basierten Ausgangsmaterials des Schaums wird bevorzugt durch zugesetztes Treibgas im Sinne einer physikalischen Schäumung und/oder durch ein chemisches Schäumungsmittel, beispielsweise durch Azodicarbonsäurediamin, hervorgerufen.

In einer weiteren Ausführungsform ist die Weichphase ein haftklebriger Polymerschaum, dessen Polymerbasis aus einem oder mehreren Polyacrylaten besteht. "Haftklebriger Schaum" bedeutet, dass der Schaum selbst eine Haftklebemasse ist und somit ein Auftrag einer zusätzlichen Haftklebeschicht nicht erforderlich ist. Dies ist vorteilhaft, weil im Herstellungsprozess weniger Schichten zusammengefügt werden müssen und das Risiko von Ablösungserscheinungen und anderen unerwünschten Phänomenen an den Schichtgrenzen sinkt.

Selbstklebemassen, auch Haftklebemassen genannt, sind im erfindungsgemäßen Sinne insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche, die leicht wiederablösbar und gegebenenfalls mehrfach verklebbar sind.
Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse wie Klebharze, Weichmacher und dergleichen beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Die Polyacrylate sind bevorzugt erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn die Polyacrylate einpolymerisierte Acrylsäure und/oder Methacrylsäure aufweisen. All diese Gruppen weisen eine Vernetzungsfähigkeit mit Epoxidgruppen auf, wodurch die Polyacrylate vorteilhaft einer thermischen Vernetzung mit eingebrachten Epoxiden zugänglich wird.

Weitere Monomere, die als Comonomere für die Polyacrylate verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des betreffenden Polyacrylats lassen sich insbesondere über eine Variation der Glasübergangstemperatur des Polymers durch unterschiedliche Gewichtsanteile der einzelnen Monomere beeinflussen. Die Polyacrylate können vorzugsweise auf die folgende Monomerzusammensetzung zurückgeführt werden:
a) Acrylsäureester und/oder Methacrylsäureester der folgenden Formel

   CH₂ = C(R^{I})(COOR^{II})

   wobei R^{I} = H oder CH₃ und R^{II} ein Alkylrest mit 4 bis 14 C-Atomen ist,
b) olefinisch ungesättigte Monomere mit funktionellen Gruppen der für eine Reaktivität mit Epoxidgruppen bereits definierten Art,
c) optional weitere Acrylate und/oder Methacrylate und/oder olefinisch ungesättigte Monomere, die mit der Komponente (a) copolymerisierbar sind.

Bevorzugt beruhen die Polyacrylate auf einer Monomerenzusammensetzung, in der die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% enthalten sind (die Angaben sind bezogen auf die Monomermischung für das "Basispolymer", also ohne Zusätze eventueller Additive zu dem fertigen Polymer, wie Harze etc.). In diesem Fall weist das Polymerisationsprodukt eine Glastemperatur ≤ 15 °C (DMA bei geringen Frequenzen) und haftklebende Eigenschaften auf.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie zum Beispiel 2 Ethylhexylacrylat oder 2 Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:
Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxy¬ethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethyl-aminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzyl-acrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht M_{w} von 4000 bis 13000 g/mol), Poly(methylmethacrylat)ethylmethacrylat (M_{w} von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, N-tert-Butylacrylamid und Allylacrylat.

Die Herstellung der Polyacrylate ("Polyacrylate" wird im Rahmen der Erfindung als synonym mit "Poly(meth)acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AlBN; Vazo® 64™ der Firma DuPont) verwendet.

Als Lösungsmittel für die Herstellung der Polyacrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte M_{W} der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol (die Angaben des mittleren Molekulargewichtes M_{W} und der Polydisperistät PD in dieser Schrift beziehen sich auf die Bestimmung per Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µm, 10³ Å, ID 8,0 mm x 50 mm verwendet. Zur Auftrennung wurden die Säulen PSS-SDV, 5 µm, 10³ Å, 10⁵ Å und 10⁶ Å mit jeweils ID 8,0 mm × 300 mm eingesetzt. Die Probenkonzentration betrug 4 g/l, die Durchflussmenge 1,0 ml pro Minute. Es wurde gegen PMMA-Standards gemessen.
Das gewichtsmittlere Molekulargewicht M_{w} wird dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁵ Å und 10⁶ Å mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. (µ = µm; 1 Å = 10⁻¹⁰ m).). Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.)

Das Polyacrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT-Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind in den Schriften US 5,945,491 A, US 5,854,364 A und US 5,789,487 A beschrieben.

Die Monomere zur Herstellung der Polyacrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Das Polyacrylat beziehungsweise die Polyacrylate sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten als Vernetzer, insbesondere den in der EP 1 791 922 A1 beschriebenen aliphatischen oder mit Aminen deaktivierten trimerisierten Isocyanaten.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).
Bevorzugt wird der thermische Vernetzer, beispielsweise das trimerisierte Isocyanat, zu 0,1 bis 5 Gew.-%, insbesondere zu 0,2 bis 1 Gew.-%, bezogen auf die Gesamtmenge des zu vernetzenden Polymers, eingesetzt.

Bevorzugt umfasst der thermische Vernetzer mindestens eine epoxidgruppenhaltige Substanz. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon beziehungsweise deren Derivaten und anderen) erhältlich sind.

Sehr geeignete Ether sind beispielsweise 1,4-Butandioldiglycidether, Polyglycerol-3-Glycidether, Cyclohexandimethanoldiglycidether, Glycerintriglycidether, Neopentylglykoldiglycidether, Pentaerythrittetraglycidether, 1,6-Hexandioidiglycid¬ether), Polypropylenglykoldiglycidether, Trimethylolpropantriglycidether, Penta¬erythrittetraglycidether, Bisphenol-A-diglycidether und Bisphenol-F-diglycidether.

Besonders bevorzugt ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine , die mit den Bausteinen der zu vernetzenden Polymere keine oder nur geringfüge Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethyl-amino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Weiterhin kann es vorgesehen sein, dass auch ein an sich haftklebriger Polymerschaum mit einer aus Polyacrylat(en) bestehenden Polymerbasis ober- und/oder unterseitig mit einer Haftklebemasse beschichtet ist, wobei die Polymerbasis dieser Haftklebemasse bevorzugt ebenfalls aus Polyacrylaten besteht. Es können alternativ andere beziehungsweise anders vorbehandelte Klebeschichten, also beispielsweise Haftklebeschichten und/oder hitzeaktivierbare Schichten auf der Basis anderer Polymere als Poly(meth)acrylate zu der geschäumten Schicht kaschiert werden. Geeignete Basispolymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrierfähigen Bestandteilen, die mit dem Material der geschäumten Schicht so gut verträglich sich, dass sie in signifikanter Menge in die geschäumte Schicht diffundieren und dort die Eigenschaften verändern.

Generell kann die Weichphase des Klebebandes mindestens ein klebrig machendes Harz enthalten.
Unter der Bezeichnung "Klebharz", englisch "Tackifier Resins", versteht der Fachmann einen Stoff auf Harzbasis, der die Klebrigkeit erhöht.

Als Klebharze können bei der Selbstklebemasse beispielsweise als Hauptkomponente insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt C₈- und C₉-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von C₈- und C₉-Aromaten (zum Beispiel Regalite und Regalrez Serien; Eastman Inc. oder Arkon M; Arakawa), hydrierte Polyterpenharze (zum Beispiel Clearon M; Yasuhara), hydrierte C₈/C₉-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Auch andere nicht hydrierte Kohlenwasserstoffharze, nicht hydrierte Analoga der oben beschriebenen hydrierten Harze, können eingesetzt werden.
Weiterhin können Kolophonium basierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Erfindungsgemäß bevorzugte Klebharze sind (teil-)hydrierte Kohlenwasserstoffharze auf Basis von C₅-, C₅/C₉- oder C₉ sowie Polyterpenharze auf Basis von α-Pinen und/oder β-Pinen und/oder δ-Limonen sowie Terpenphenolharze.
Ganz besonders bevorzugt sind Terpenphenolharze, und zwar insbesondere nur Terpenphenolharze, ohne dass weitere Harztypen Verwendung finden.

Zur Stabilisierung der Haftklebemasse werden üblicherweise primäre Antioxidantien wie zum Beispiel sterisch gehinderte Phenole, sekundäre Antioxidantien wie zum Beispiel Phosphite oder Thioether und/oder C-Radikalfänger zugesetzt.

Der Haftklebemasse können zur Einstellung von optischen und klebtechnischen Eigenschaften Additive wie Füllstoffe, Farbstoffe oder Alterungsschutzmittel (Antiozonantien, Lichtschutzmittel usw.) enthalten.

Als Additive zur Klebemasse werden typischerweise genutzt:
- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, weiter vorzugsweise bei bis zu 15 Gew. %.

Die aufgezählten Stoffe sind nicht zwingend, die Klebemasse funktioniert auch, ohne dass diese einzeln oder in beliebiger Kombination zugesetzt sind, also ohne Füllstoffe und/oder Farbstoffe und/oder Alterungsschutzmittel.

Die Weichphase des Klebebandes kann einen oder mehrere Additive enthalten. Der oder die Additiv(e) kann/können in einer oder in mehreren Schichten der Weichphase vorliegen.

Bevorzugt umfasst die Weichphase einen Polymerschaum, und der Polymerschaum enthält teil- oder vollexpandierte Mikroballons, insbesondere, wenn die Polymerbasis des Polymerschaums ein oder mehrere Polyacrylat(e) umfasst und ganz besonders bevorzugt, wenn die Polymerbasis des Polymerschaums aus einem oder mehreren Polyacrylat(en) besteht. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - auch als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 µm Durchmesser im unexpandierten Zustand) und ihre zur Expansion benötigte Starttemperatur (75°C bis 220°C) differenzieren. Weiterhin sind unexpandierte Mikroballontypen auch als wässrige Dispersion mit einem Feststoff- beziehungsweise Mikroballonanteil von ca. 40 bis 45 Gew.-% erhältlich, darüber hinaus auch als polymergebundende Mikroballons (Masterbatche), zum Beispiel in Ethylvinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung eines in der Weichphase des Klebebandes enthaltenen Polymerschaums geeignet.

Besonders bevorzugt enthält der Polymerschaum Mikroballons, die im nicht expandierten Zustand bei 25 °C einen Durchmesser von 3 µm bis 40 µm, insbesondere von 5 µm bis 20 µm, und/oder nach Expansion einen Durchmesser von 10 µm bis 200 µm, insbesondere von 15 µm bis 90 µm, aufweisen.

Bevorzugt enthält der Polymerschaum bis zu 30 Gew.-% Mikroballons, insbesondere zwischen 0,5 Gew.-% und 10 Gew.-%, jeweils bezogen auf die Gesamtmasse des Polymerschaums.

Der Polymerschaum der Weichphase des Klebebandes - sofern diese einen Polymerschaum umfasst - ist bevorzugt gekennzeichnet durch die weitgehende Abwesenheit von offenzelligen Hohlräumen. Besonders bevorzugt weist der Polymerschaum einen Anteil von Hohlräumen ohne eigene Polymerhülle, also von offenzelligen Kavernen, von nicht mehr als 2 Vol-% auf, insbesondere von nicht mehr als 0,5 Vol.-%. Der Polymerschaum ist somit bevorzugt ein geschlossenzelliger Schaum.

Eine Haftklebemasse, die expandierte polymere Mikrokugeln enthält, kann auch teilweise nicht vollständig oder gar nicht expandierte Mikrokugeln enthalten. Im Prozess stellt sich vielmehr eine Verteilung unterschiedlicher Expansionszustände ein.
Im erfindungsgemäßen Sinne bedeutet, dass expandierte Mikroballons voll- aber auch teilexpandierte Mikroballons umfassen. Nicht expandierte Mikroballons können zusätzlich vorhanden sein.

Eine expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und/oder - im Spektrum der in der Kunststoffverarbeitung möglichen Temperaturen - nicht-thermoplastischem Glas.

Geeignet für die Haftklebemasse sind außerdem - unabhängig gewählt von anderen Additiven - Polymervollkugeln wie PMMA-Kugeln, Glashohlkugeln, Glasvollkugeln, Phenolharzkugeln, keramische Hohlkugeln, keramische Vollkugeln und/oder Kohlenstoffvollkugeln ("Carbon Micro Balloons"), vorzugsweise sind die genannten Bestandteile nicht in der Haftklebemasse enthalten.

Die geschäumte Haftklebemasse stellt einen syntaktischen Schaum dar. Bei einem syntaktischen Schaum sind die Hohlräume voneinander getrennt und die in den Hohlräumen befindlichen Substanzen (Gas, Luft) durch eine Membran von der umgebenden Matrix abgetrennt. Dadurch ist das Material wesentlich stärker als herkömmliche Schäume mit unverstärkten Gaseinschlüssen.

Optional kann die Weichphase des Klebebandes auch pulver- und/oder granulatförmige Füllstoffe, Farbstoffe und Pigmente, insbesondere auch abrasive und verstärkende Füllstoffe wie zum Beispiel Kreiden (CaCO₃), Titandioxide, Zinkoxide und Ruße auch zu hohen Anteilen, das heißt von 0,1 bis 50 Gew.-%, bezogen auf die Gesamtmasse der Weichphase, enthalten.

Weiterhin können schwerentflammbare Füllstoffe wie beispielsweise Ammoniumpolyphosphat; elektrisch leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in der Weichphase enthalten sein. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Die Dicke der Weichphase beträgt vorzugsweise 200 bis 1800 µm, besonders bevorzugt 300 bis 1500 µm, insbesondere 400 bis 1000 µm. Die Dicke der Weichphase wird nach ISO 1923 bestimmt.

Die Verbindung von Hart- und Weichphase beziehungsweise auch von in der Hart- und/oder Weichphase vorgesehenen Schichten untereinander zum Klebeband kann beispielsweise durch Laminieren, Kaschieren oder Coextrusion erfolgen. Es ist möglich, dass Hart- und Weichphase direkt, das heißt unmittelbar, miteinander verbunden sind. Ebenso ist es möglich, dass zwischen Hart- und Weichphase eine oder mehrere haftvermittelnde Schicht(en) angeordnet ist/sind. Das Klebeband kann darüber hinaus weitere Schichten enthalten.

Bevorzugt ist mindestens eine der miteinander zu verbindenden Schichten, stärker bevorzugt sind mehrere der miteinander zu verbindenden Schichten und ganz besonders bevorzugt sind alle der miteinander zu verbindenden Schichten mit Corona- (mit Luft oder Stickstoff), Plasma- (Luft, Stickstoff oder andere reaktive Gase beziehungsweise reaktive, als Aerosol einsetzbare Verbindungen) oder Flammenvorbehandlungsmethoden vorbehandelt.

Auf der Rückseite, das heißt auf der vom Substrat abgewandten Seite der Hartphase, ist bevorzugt eine Funktionsschicht aufgebracht, die beispielsweise Trenneigenschaften oder UV-stabilisierende Eigenschaften aufweist. Diese Funktionsschicht besteht bevorzugt aus einer Folie mit einer Dicke von ≤ 20 µm, besonders bevorzugt von ≤ 10 µm, insbesondere von ≤ 8 µm, beispielsweise von ≤ 5 µm oder einem Lack mit einer Dicke von ≤ 10 µm, besonders bevorzugt von ≤ 6 µm, insbesondere von ≤ 3 µm beispielsweise von ≤ 1,5 µm. Sowohl die Folie als auch der Lack enthalten bevorzugt einen UV-Absorber, und/oder die Polymerbasis der Folie beziehungsweise des Lacks enthält UV-absorbierende und/oder UV-abweisende Gruppen.

Folien können durch Laminieren, Kaschieren oder Coextrusion auf die Rückseite der Hartphase aufgebracht werden. Bei der Folie handelt es sich bevorzugt um eine metallisierte Folie. Die Polymerbasis der Folie ist bevorzugt ausgewählt aus der Gruppe bestehend aus Polyarylenen, Polyvinylchloriden (PVC), Polyethylenterephthalaten (PET), Polyurethanen, Polyolefinen, Polyutylenterephthalaten (PBT), Polycarbonaten, Polymethylmethacrylaten (PMMA), Polyvinylbutyralen (PVB), lonomeren und Mischungen aus zwei oder mehreren der vorstehend aufgeführten Polymere. "Hauptbestandteil" bedeutet hier "Bestandteil mit dem größten Gewichtsanteil, bezogen auf das Gesamtgewicht der Folie". Mit Ausnahme der Polyarylene weisen alle aufgeführten Materialien der Folie bevorzugt einen hohen Gehalt an UV-Stabilisatoren auf.

In einer speziellen Ausführungsform besteht das Klebeband in auf das Substrat gerichteter Reihenfolge aus einer Funktionsschicht (wie vorstehend beschrieben); einer Hartphase und einer Weichphase bestehend aus einer Haftklebeschicht, einem Polymerschaum, dessen Polymerbasis aus einem oder mehreren Polyolefinen besteht, und einer weiteren Haftklebeschicht. Die untere Haftklebeschicht kann mit einem Releaseliner abgedeckt sein, dieser wird jedoch nicht zum Klebeband gerechnet.

In einer weiteren speziellen Ausführungsform besteht das Klebeband in auf das Substrat gerichteter Reihenfolge aus einer Funktionsschicht (wie vorstehend beschrieben); einer Hartphase und einer haftklebrigen Weichphase, deren Polymerbasis aus einem oder mehreren Polyacrylaten besteht. Auch bei dieser Ausführungsform kann die Unterseite, das heißt die dem Substrat zugewandte Seite, der Weichphase mit einem Releaseliner abgedeckt sein, dieser wird jedoch nicht zum Klebeband gerechnet.

Bevorzugt handelt es sich bei den Klebebändern um geschäumte Acrylatmassen insbesondere der oben beschriebenen Art, die zusätzlich einen (oder mehrere) Zwischenträger haben können.

Als nicht-thermoplastisches Elastomer kann die Klebemasse Kautschuk, insbesondere Naturkautschuk enthalten. Weiterhin kann die Klebemasse synthetische Kautschuke wie beispielsweise Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Polyarcylate, der Acrylatkautschuke (ACM), der Polybutadiene (PB), der Ethylen-Vinylacetat-Copolymeren (EVA) und der Polyurethane und/oder deren Blends einzeln oder in beliebiger Abmischung auch mit Naturkautschuk enthalten.

Der besonders bevorzugte Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau gewählt werden.

Vorzugsweise können dem Naturkautschuk zur Verbesserung der Verarbeitbarkeit thermoplastische Elastomere wie beispielsweise Synthesekautschuke mit einem Anteil von bis zu 5 Gew.-% zugesetzt werden.
Stellvertretend genannt seien an dieser Stelle vor allem die besonders verträglichen Styrol-Isopren-Styrol (SIS)- und Styrol-Butadien-Styrol (SBS)-Typen.

Vorzugsweise besteht das Basispolymer der Haftklebemasse aus Naturkautschuk, weiter vorzugsweise ist neben Naturkautschuk kein weiteres elastomeres Polymer in der Haftklebemasse vorhanden.

In diesem Fall ist die Haftklebemasse eine Zusammensetzung aus Naturkautschuk, einem oder mehreren Klebharz(en), vorzugsweise Alterungsschutzmittel(n) und expandierten polymeren Mikrokugeln, was eine bevorzugte Ausführungsform darstellt. Darüber hinaus können zusätzlich die später erläuterten Füllstoffe und/oder Farbstoffein geringen Mengen gegebenenfalls enthalten sein.

Vorzugsweise wird die Haftklebemasse in Klebebändern genutzt.
Als Klebebänder im erfindungsgemäßen Sinne sollen dabei alle ein- oder beidseitig mit der erfindungsgemäßen Klebemasse beschichteten flächigen oder bandförmigen Trägergebilde verstanden werden, also neben klassi¬schen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.
Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt.
Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Neben den genannten Transferklebebändern werden doppelseitige Klebebänder bevorzugt, bei denen der Träger, insbesondere die Trägerfolie beidseitig mit der erfindungsgemäßen Haftklebemasse ausgerüstet ist.

Das Klebeband kann in festen Längen wie zum Beispiel als Meterware oder aber als Endlosware auf Rollen (archimedische Spirale) zur Ver¬fügung gestellt werden.

Als Trägermaterialien für das Haftklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Besonders bevorzugt werden Trägermaterialien, die nicht oder nur sehr schwach dehnfähig sind wie BOPP und insbesondere PET.

Als Materialien für die Folie werden Polyester, insbesondere Polyethylenterephthalat, Polyamid, Polyimid oder mono- oder biaxial verstrecktes Polypropylen verwendet. Ebenfalls möglich ist auch die Verwendung von mehrschichtigen Laminaten oder Coextrudaten.
Vorzugsweise ist die Folie einschichtig.

Um sehr gute Ergebnisse für die Aufrauhung zu erzielen, ist es zu empfehlen, als Reagenz zum Ätzen der Folie Trichloressigsäure (Cl₃C-COOH) oder Trichloressigsäure in Kombination mit inerten kristallinen Verbindungen, bevorzugt Siliziumverbindungen, besonders bevorzugt [SiO₂]ₓ, einzusetzen.
Sinn der inerten kristallinen Verbindungen ist, in die Oberfläche der PET-Folie eingebaut zu werden, um auf diese Weise die Rauigkeit und die Oberflächenenergie zu verstärken.

Die Dicke der Folie liegt gemäß einer bevorzugten Ausführungsform zwischen 5 und 250 µm, vorzugsweise zwischen 6 und 120 µm, insbesondere zwischen 12 und 100 µm, ganz besonders zwischen 12 und 50 µm.

Vorzugsweise besteht die Folie aus Polyethylenterephthalat und weist eine Dicke zwischen 12 und 50 µm auf.

Die Trägerfolien können darüber hinaus weitere Additive wie UV-Schutzmittel oder auch halogenfreie Flammschutzmittel enthalten.

Zur Herstellung der Folie kann es angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Das Trägermaterial kann ein- oder vorzugsweise beidseitig mit der erfindungsgemäßen Haftklebemasse ausgerüstet sein. Bei dem beidseitig mit der erfindungsgemäßen Haftklebemasse ausgerüsteten Klebeband bildet zumindest eine Schicht die erfindungsgemäße Haftklebemasse.

Das Haftklebeband wird dadurch gebildet, dass auf den Träger partiell oder vollflächig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Klebmasse oder einer physikalischen Vorbehandlung der Trägeroberfläche zur Verbesserung der Haftung der Klebmasse auf dem Träger.
Als Primer sind die bekannten Dispersion- und Lösungsmittelsysteme verwendbar zum Beispiel auf Basis von Isopren- oder Butadien haltigen Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Des Weiteren kann das Trägermaterial (bei einem einseitig klebend ausgerüsteten Klebeband) rück- oder oberseitig, also der Klebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.
Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer C-Zahl von mindestens 10 wie zum Beispiel Octadecyl.
Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, Coronavorbehandlungen wie N₂-Corona oder Plasmavorbehandlungen, geläufige Nachbehandlungen sind Kalandern, Tempern, Kaschieren, Stanzen und Eindecken.

Das Klebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Haftklebeband,
- Figur 2: ein beidseitiges Haftklebeband,
- Figur 3: ein trägerfreies Haftklebeband (Transferklebeband).

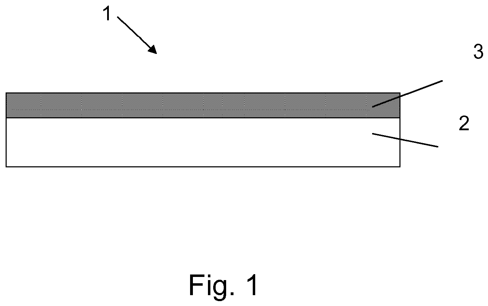

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

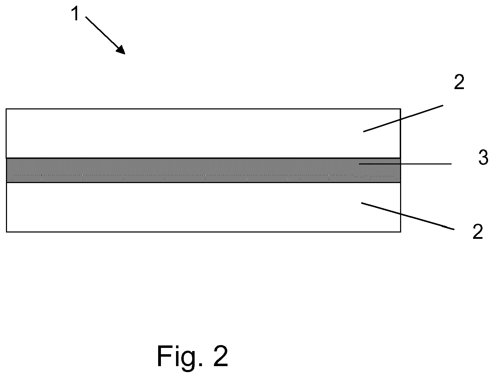

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist.

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

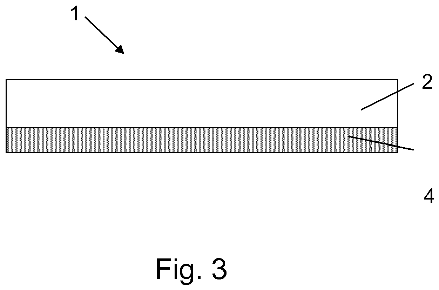

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus.
Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

### Bezugszeichenliste

1) Füllteil mit Einschnecke
2) Walzenzylinder 1
3) Walzenzylinder 2
4) Walzenzylinder 3
5) Schmelzepumpe für Produktaustrag
6) Rückwärtige Vakuumentgasung über Füllteil
7) Zugabeöffnung für die plastifizierten Polymere
8) Öffnung im Walzenzylinder zur Vakuumentgasung mit Produktniederhaltewerk
9) Zugabeöffnung im Zwischenring für Flüssigkeiten
10) Zugabeöffnung im Walzenzylinder für Flüssigkeiten
11) Vakuumpumpe
12) Produktaustritt
13) Temperierkreis für Zentralspindel
14) Temperierkreis für Walzenzylinder 1
15) Temperierkreis für Walzenzylinder 2
16) Temperierkreis für Walzenzylinder 3
17) Zwischenring

## Patentansprüche

1. Verfahren zur Herstellung von thermisch vernetzbaren Polymeren in einem Planetwalzenextruder, wobei
a) der Planetwalzenextruder einen Füllteil (1) und einen Compoundierteil aufweist, der von einem Walzenzylinderbereich gebildet wird, der mindestens aus zwei, gekoppelten Walzenzylindern (2,3) besteht, dessen Planetenspindeln durch eine einzige gemeinsame Zentralspindel angetrieben werden, wobei
b) die Polymere dem Planetwalzenextruder in einem plastifizierten Zustand zugeführt werden, wobei
c) die plastifizierten Polymere in den ersten Walzenzylinder eingespeist werden, und zwar innerhalb der ersten Hälfte des ersten Walzenzylinders (2), wobei
d) der Füllteil (1) des Planetwalzenextruders mit Vakuum beaufschlagt ist, **dadurch gekennzeichnet, dass**
e) im einen Fall, dass der Walzenzylinderbereich aus zwei Walzenzylindern (2,3) gebildet wird, der Mantel des zweiten Walzenzylinders eine Öffnung aufweist, über die die plastifizierten Polymere mittels Vakuum von Luft und gegebenenfalls weiteren flüchtigen Komponenten befreit werden, oder im anderen Fall, dass der Walzenzylinderbereich aus mehr als zwei Walzenzylindern gebildet wird, der Mantel des zweiten Walzenzylinders (3) der mindestens drei Walzenzylinder (2,3,4) oder der Mantel eines stromab anschließenden Walzenzylinders eine Öffnung aufweist, über die die plastifizierten Polymere mittels Vakuum von Luft und weiteren flüchtigen Komponenten befreit werden,
f) wobei die Vorlauftemperaturen von Zentralspindel und der unter Vakuum stehenden mindestens zwei Walzenzylinder (2,3) so eingestellt sind, dass die zu entgasenden Polymere im plastischen Zustand verbleiben,
g) wobei stromab der Entgasung mittels Vakuum den plastifizierten Polymeren eine oder mehrere Flüssigkeiten wie thermische Vernetzer, Vernetzungsbeschleuniger, Farbstofflösungen oder Farbstoffdispersionen zudosiert werden, also in den zweiten Walzenzylinder (3) oder in einen oder mehreren der vorhandenen weiteren Walzenzylindern (4) oder in die Zwischenringe zwischen zweitem und drittem Walzenzylinder (3,4) oder zwischen drittem und viertem Walzenzylinder,
h) wobei die Mischung aus plastifizierten Polymeren und Flüssigkeiten in dem Walzenzylinderbereich, in dem die Flüssigkeiten in die plastifizierten Polymere eingearbeitet werden, so gekühlt werden, dass es nach Austritt der Mischung aus dem Planetwalzenextruder zu keiner Verdampfung der in den plastifizierten Polymeren bevorzugt homogen eingemischten Flüssigkeiten kommt,
i) wobei die Länge des Walzenzylinderbereichs, in dem eine Entgasung der plastifizierten Polymere mittels Vakuum erfolgt, zwischen 50 % und 80 % der Länge des gesamten Walzenzylinderbereichs liegt,
j) wobei die Mischung aus plastifizierten Polymeren und modifizierenden Flüssigkeiten einem Beschichtungsaggregat zugeführt wird.

2. Verfahren nach Anspruch 1,
**dadurch gekennzeichnet, dass**
zusätzlich bereits in der Mantelöffnung des ersten Walzenzylinders (2) zumindest eine Öffnung vorhanden ist, über die die plastifizierten Polymere mittels Vakuum von Luft und flüchtigen Komponenten befreit werden.

3. Verfahren nach Anspruch 1 oder 2,
**dadurch gekennzeichnet, dass**
die Entgasung im Füllteil des ersten Walzenzylinders erfolgt, indem am Austritt am Füllteil oder an der Mantelöffnung des ersten Walzenzylinders (2) ein Druck von kleiner als 50 mbar.

4. Verfahren nach zumindest einem der Ansprüche 1 bis 3,
**dadurch gekennzeichnet, dass**
die Öffnung im Mantel des zweiten Walzenzylinders (3) mit einem Produktniederhaltewerk ausgestattet ist, das einen Austritt der plastifizierten Polymere aus dem Planetwalzenextruder verhindert, wobei das Produktniederhaltewerk als kämmendes Doppelschneckenpaar ausgeführt ist, über dessen freie Flanken Luft sowie weitere flüchtige Bestandteile den plastifizierten Polymeren unter dem Einfluss von Wärme und Vakuum entzogen werden.

5. Verfahren nach zumindest einem der vorherigen Ansprüche,
**dadurch gekennzeichnet, dass**
die Einspeisung der Flüssigkeiten in die plastifizierten Polymere in einen Zwischenring erfolgt, der zwischen dem zweiten und dem dritten Walzenzylinder (3,4) liegt und der zum Zwecke der Einspeisung der modifizierenden Flüssigkeiten über mindestens eine radiale Bohrung verfügt.

6. Verfahren nach zumindest einem der vorherigen Ansprüche,
**dadurch gekennzeichnet, dass**
die Einspeisung der modifizierenden Flüssigkeiten in den Planetwalzenextruder über eine oder mehrere Bohrungen im Mantel eines Walzenzylinders (2,3,4) erfolgt, wobei die Bohrungen in einem Bereich innerhalb der ersten Hälfte des Walzenzylinders (2,3,4)liegen.

7. Verfahren nach zumindest einem der vorherigen Ansprüche,
**dadurch gekennzeichnet, dass**
die Einspeisung der plastifizierten Polymere in den Planetwalzenextruder (2,3,4) durch eine Öffnung in der Wandung des ersten Walzenzylindermantels erfolgt oder über einen Zwischenring, der sich zwischen Füllteil und erstem Walzenzylinder befindet und der zum Zwecke der Einspeisung der plastifizierten Polymere über mindestens eine radiale Bohrung verfügt.

8. Verfahren nach zumindest einem der vorherigen Ansprüche,
**dadurch gekennzeichnet, dass**
die Einspeisung der plastifizierten Polymere in den Planetwalzenextruder mittels einer Schmelzepumpe oder eines Ein- oder Mehrwellenextruders oder mittels einer Fass- oder Tankschmelzeinheit erfolgt.

9. Verfahren nach zumindest einem der vorherigen Ansprüche,
**dadurch gekennzeichnet, dass**
der Austritt der Mischung aus dem Planetwalzenextruder mittels einer am Ende des Walzenzylinderbereiches gekoppelten Schmelzepumpe (5) erfolgt.

10. Verfahren nach zumindest einem der vorherigen Ansprüche,
**dadurch gekennzeichnet, dass**
das Beschichtungsaggregat ein Kalander oder eine Düse ist, durch das die Mischung auf ein Trägermaterial aufgebracht wird.

11. Verfahren nach zumindest einem der vorherigen Ansprüche,
**dadurch gekennzeichnet, dass**
es sich bei den plastifizierten Polymeren um Polymere aus der Gruppe der nicht-thermoplastischen Elastomere, der thermoplastischen Synthesekautschuke, der Polyacrylate, der Polyurethane, der Polyepoxide sowie Mischungen hieraus handelt.

12. Verfahren nach zumindest einem der vorherigen Ansprüche,
**dadurch gekennzeichnet, dass**
die plastifizierten Polymere mit klebrig machenden Harzen, Füllstoffen, Weichmachern, Ölen, Thixotropiermitteln und weiteren Zuschlagstoffen abgemischt sind.

13. Verfahren nach zumindest einem der vorherigen Ansprüche,
**dadurch gekennzeichnet, dass**
es sich bei der aus dem Planetwalzenextruder kommenden Mischung um eine Selbsthaftklebemassen oder um eine aushärtbare Strukturklebemasse handelt.

## Claims

1. Method for producing thermally crosslinkable polymers in a planetary roller extruder, wherein
a) the planetary roller extruder possesses a feed section (1) and a compounding section, the latter being formed by a roller cylinder area that consists of at least two coupled roller cylinders (2,3), whose planetary spindles are driven by a single common central spindle, wherein
b) the polymers are supplied in a plastified state to the planetary roller extruder, wherein
c)the plastified polymers are fed into the first roller cylinder, namely within the first half of the first roller cylinder (2), wherein
d) the feed section (1) of the planetary roller extruder is subjected to a vacuum, **characterised in that**
e) in the case where the roller cylinder area is formed by two roller cylinders (2,3), the casing of the second roller cylinder possesses an opening, through which air and possibly other volatile components are removed from the plastified polymers by means of a vacuum, or in another case,
where the roller cylinder area is formed by more than two roller cylinders, the casing of the second roller cylinder (3) of the at least three roller cylinders (2,3,4), or the casing of a subsequent downstream roller cylinder possesses an opening, through which air and other volatile components are removed from the plastified polymers by means of a vacuum,
f) wherein the temperatures of the central spindle and of the two roller cylinders (2,3) under vacuum are preset, such that the polymers to be degassed remain in a plastic state,
g) wherein downstream of the vacuum degassing point, one or more liquids such as thermal crosslinkers, crosslinking accelerators, colourant solutions or colourant dispersions are dosed into the plastified polymers, thus to the second roller cylinder (3) or to one or more of the additional roller cylinders (4) or to an intermediate ring between the second and third roller cylinders (4) or between the third and fourth roller cylinder,
h) wherein the blends of plastified polymers and liquids in the roller cylinder area, in which the liquids are incorporated into the plastified polymers, are cooled down such that, after exiting the planetary roller extruder, no evaporation takes place of the liquids that have been preferably homogeneously blended into the plastified polymers,
i) wherein the length of the roller cylinder area, in which the plastified polymers are degassed under vacuum, is between 50 % and 80 % of the length of the entire roller cylinder area,
j) wherein the blend of plastified polymers and modifying liquids is fed into a coating unit.

2. Method according to claim 1,
**characterised in that**
in the casing opening of the first roller cylinder (2) at least one additional opening is already provided, through which air and volatile components are vacuum degassed from the plastified polymers by means of a vacuum.

3. Method according to claim 1 or 2,
**characterised in that**
the degassing in the feed section of the first roller cylinder takes place by applying a pressure of less than 50 mbar at an outlet on the feed section or at a casing opening of the first roller cylinder.

4. Method according to at least one of claims 1 to 3, **characterised in that**
the opening in the casing of the second roller cylinder (3) is equipped with a product suppression device that prevents the plastified polymers from exiting the planetary roller extruder, wherein said product suppression device is realised as an intermeshing twin screw pair, whereby under the influence of heat and vacuum the air and additional volatile components are removed from the plastified polymers through the free flanks of said device.

5. Method according to at least one of the preceding claims,
**characterised in that**
the feeding of the liquids into the plastified polymers takes place into an intermediate ring that is located between the second and the third roller cylinder (3,4) and which has at least one radial bore for feeding the modifying liquids.

6. Method according to at least one of the preceding claims,
**characterised in that**
the feeding of the modifying liquids into the planetary roller extruder is achieved through one or more bores in the casing of a roller cylinder (2,3,4), wherein the bores are located in a region within the first half of the roller cylinder (2,3,4).

7. Method according to at least one of the preceding claims,
**characterised in that**
the feeding of the plastified polymers into the planetary roller extruder (2,3,4) occurs through an opening in the wall of the first roller cylinder casing or
through an intermediate ring that is located between the feed section and the first roller cylinder and which has at least one radial bore for feeding the plastified polymers.

8. Method according to at least one of the preceding claims,
**characterised in that**
the plastified polymers are fed into the planetary roller extruder by means of a melt pump or by a single- or multi-screw extruder, or by a barrel or tank melt unit.

9. Method according to at least one of the preceding claims,
**characterised in that**
the blend is discharged out of the planetary roller extruder by means of a melt pump (5) coupled to one end of the roller cylinder area.

10. Method according to at least one of the preceding claims,
**characterised in that**
the coating unit is a calendar or a die, through which the blend is applied onto a carrier material.

11. Method according to at least one of the preceding claims,
**characterised in that**
the plastified polymers are from the group of the non-thermoplastic elastomers, thermoplastic synthetic rubbers, polyacrylates, polyurethanes, polyepoxides, and mixtures thereof.

12. Method according to at least one of the preceding claims,
**characterised in that**
the plastified polymers are blended with tackifying resins, fillers, plasticisers, oils, thixotropic agents and further additives.

13. Method according to at least one of the preceding claims,
**characterised in that**
the mixture coming out of the planetary roller extruder concerns a pressure-sensitive adhesive compound or a curable structural adhesive compound.

## Revendications

1. Procédé pour la fabrication de polymères réticulables thermiquement dans une extrudeuse à rouleaux planétaires, selon lequel
a) l'extrudeuse à rouleaux planétaires possède une partie de remplissage (1) et une partie de mélange qui est formée par un espace de rouleaux cylindriques qui comprend au moins deux rouleaux cylindriques (2, 3) dont les broches planétaires sont entraînées par unebroche centrale commune unique, selon lequel
b) les polymères sont introduits dans l'extrudeuse à rouleaux planétaires dans un état plastifié, selon lequel
c) les polymères plastifiés sont injectés dans le premier rouleau cylindrique, et plus particulièrement dans la première moitié du premier rouleau cylindrique (2), et selon lequel
d) la partie de remplissage (1) de l'extrudeuse à rouleaux planétaires est soumise à un vide, **caractérisé en ce que**
e) dans un cas où l'espace de rouleaux cylindriques est formé de deux rouleaux cylindriques (2, 3), l'enveloppe du deuxième rouleau cylindrique présente une ouverture par laquelle les polymères plastifiés sont libérés par le vide de l'air et éventuellement d'autres composants volatils, ou dans l'autre cas où l'espace de rouleaux cylindriques est formé de plus de deux rouleaux cylindriques, l'enveloppe du deuxième rouleau cylindrique (3) des au moins trois rouleaux cylindriques (2, 3, 4) ou l'enveloppe d'un rouleau cylindrique suivant en aval présente une ouverture par laquelle les polymères plastifiés sont libérés par le vide de l'air et d'autres composants volatils,
f) les températures de départ de la broche centrale et des au moins deux rouleaux cylindriques (2, 3) sous vide étant réglées de sorte que les polymères qui dégazent restent à l'état plastique,
g) un ou plusieurs liquides tels que des agents de réticulation thermique, des accélérateurs de réticulation, des solutions colorantes ou des dispersions de colorant étant ajoutés en aval du dégazage par le vide des polymères plastifiés, à savoir dans le deuxième rouleau cylindrique (3) ou dans un ou plusieurs des autres rouleaux cylindriques présents (4) ou dans les anneaux intermédiaires entre les deuxième et troisième rouleaux cylindriques (3, 4) ou entre les troisième et quatrième rouleaux cylindriques,
h) le mélange des polymères plastifiés et des liquide dans l'espace de rouleaux cylindriques dans lequel les liquides sont intégrés dans les polymères plastifiés étant refroidi de sorte qu'après la sortie du mélange de l'extrudeuse à rouleaux planétaires, aucune vapeur ne s'échappe des liquides mélangés de préférence de manière homogène dans les polymères plastifiés,
i) la longueur de l'espace de rouleaux cylindriques dans lequel le dégazage des polymères plastifiés par le vide se produit correspondant à entre 50% et 80% de la longueur de l'espace de rouleaux cylindriques total et
j) le mélange des polymères plastifiés et des agents de modification liquides étant introduit dans une unité de revêtement.

2. Procédé selon la revendication 1,
**caractérisé**
**en ce qu'**en plus de l'ouverture de l'enveloppe du premier rouleau cylindrique (2) est présente au moins une ouverture par laquelle les polymères plastifiés sont libérés par le vide de l'air et des composants volatils.

3. Procédé selon la revendication 1 ou 2,
caractérisé
le dégazage se produit dans la partie de remplissage du premier rouleau cylindrique, une pression de moins de 50 mbar régnant à la sortie de la partie de remplissage ou au niveau de l'ouverture de l'enveloppe du premier rouleau cylindrique (2).

4. Procédé selon au moins une des revendications précédentes,
**caractérisé**
**en ce que** l'ouverture dans l'enveloppe du deuxième rouleau cylindrique (3) est équipée d'un dispositif de retenue de produit qui empêche les polymères plastifiés de sortir de l'extrudeuse à rouleaux planétaires, ce dispositif de retenue de produit se présentant comme une double paire de vis dentée par les flancs libres de laquelle l'air ainsi que les composants volatils des polymères plastifiés sont extraits sous l'effet de la chaleur et du vide.

5. Procédé selon au moins une des revendications précédentes,
**caractérisé**
**en ce que** l'injection des fluides dans les polymères plastifiés a lieu dans un anneau intermédiaire qui se trouve entre le deuxième et le troisième rouleau cylindrique (3, 4) et qui dispose d'au moins un perçage radial pour injecter les fluides modifiés.

6. Procédé selon au moins une des revendications précédentes,
**caractérisé**
**en ce que** l'injection des fluides modifiés dans l'extrudeuse à rouleaux cylindrique se fait par un ou plusieurs perçages dans l'enveloppe d'un rouleau cylindrique (2, 3, 4), les perçages se trouvant dans une zone située dans la première moitié du rouleau cylindrique (2, 3, 4).

7. Procédé selon au moins une des revendications précédentes,
**caractérisé**
**en ce que** l'injection des polymères plastifiés dans l'extrudeuse à rouleaux planétaires (2, 3, 4) se fait par une ouverture dans la paroi de l'enveloppe du premier rouleau cylindrique ou via un anneau intermédiaire qui se trouve entre l'espace de remplissage et le premier rouleau cylindrique et qui dispose d'au moins un perçage radial pour injecter les polymères plastifiés.

8. Procédé selon au moins une des revendications précédentes,
**caractérisé**
**en ce que** l'injection des polymères plastifiés dans l'extrudeuse à rouleaux planétaires se fait au moyen d'une pompe pour produit fondu ou d'une extrudeuse à un ou plusieurs axes ou au moyen d'un fondoir à fût ou à cuve.

9. Procédé selon au moins une des revendications précédentes,
**caractérisé**
**en ce que** la sortie du mélange de l'extrudeuse à rouleaux planétaires se fait au moyen d'une pompe pour produit fondu (5) accouplée à l'extrémité de la zone du rouleau cylindrique.

10. Procédé selon au moins une des revendications précédentes,
**caractérisé**
**en ce que** l'unité de revêtement est une calandre ou une buse par laquelle le mélange est déposé sur un matériau de support.

11. Procédé selon au moins une des revendications précédentes,
caractérisé
les polymères plastifiés sont des polymères appartenant au groupe des élastomères non thermoplastiques, des caoutchoucs de synthèse thermoplastiques, des polyacrylates, des polyuréthanes et des polyépoxides ainsi que des mélanges de ceux-ci.

12. Procédé selon au moins une des revendications précédentes,
caractérisé
les polymères plastifiés sont mélangés avec des résines apportant un pouvoir collant, des matières de charge, des assouplissants, des huiles, des agents thixotropes et d'autres additifs.

13. Procédé selon au moins une des revendications précédentes,
**caractérisé**
**en ce que** le mélange sortant de l'extrudeuse à rouleaux planétaires est une colle autoadhésive ou une colle structurale durcissable.
